(19) Europäisches Patentamt

European Patent Office

Office européen des brevets

(11) **EP 3 873 989 B1**

(12) **EUROPEAN PATENT SPECIFICATION**

(45) Date of publication and mention
of the grant of the patent:
**08.02.2023 Bulletin 2023/06**

(21) Application number: **19797273.0**

(22) Date of filing: **31.10.2019**

(51) International Patent Classification (IPC):
***C08L 77/06*** (1974.07)

(52) Cooperative Patent Classification (CPC):
(C-Sets available)
**C08L 77/06;** C08L 2205/025; C08L 2205/03 (Cont.)

(86) International application number:
**PCT/EP2019/079883**

(87) International publication number:
**WO 2020/089418 (07.05.2020 Gazette 2020/19)**

(54) **A STAIN-RESISTANT POLYAMIDE COMPOSITION**

FLECKENBESTÄNDIGE POLYAMIDZUSAMMENSETZUNG

COMPOSITION DE POLYAMIDE RÉSISTANT AUX TACHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2018 PCT/CN2018/113650
31.01.2019 EP 19154798**

(43) Date of publication of application:
**08.09.2021 Bulletin 2021/36**

(73) Proprietor: **DSM IP Assets B.V.
6411 TE Heerlen (NL)**

(72) Inventors:
• **LIU, Xin
6100 AA ECHT (NL)**
• **ZHENG, Lidong
6100 AA ECHT (NL)**
• **LIAO, Ruogu
6100 AA ECHT (NL)**

(74) Representative: **DSM Intellectual Property
P.O. Box 4
6100 AA Echt (NL)**

(56) References cited:
**WO-A1-2018/178128      US-A1- 2013 231 431
US-A1- 2014 179 851**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)

C-Sets
**C08L 77/06, C08K 3/013, C08K 7/14, C08L 27/18,
C08L 77/06**

**Description**

Present invention relates to a stain-resistant polyamide composition, especially relates to a stain-resistant polyamide composition comprising at least one semi-crystalline semi-aromatic polyamide, at least one aliphatic polyamide and one amorphous semi-aromatic polyamide.

Semi-crystalline semi-aromatic polyamide such as those derived from terephthalic acid and aliphatic diamines having excellent mechanical, physical and chemical properties which make them useful for a wide variety of different application. In particular, the semi-crystalline semi-aromatic polyamides are good candidates for the manufacture of articles such as portable electronic devices. Portable electronic devices, such as mobile telephones, personal digital assistant laptop and the like becoming increasingly widely used globally in many different environments. It is often desirable that those material have good stiffness and high impact resistance, exhibit high dimensional stability when they are formed into housing. Many attempts have been made to offer a polyamide material suitable for the manufacture of portable electronic devices housings. However, these materials still suffer from a significant drawback: they are not resistant to the staining agents that are often put in contact with these portable electronic devices' housings. Typical staining agents include: makeup (such as lipstick, lip gloss, lip liner, lip balm etc.), natural colorants (such as those found in soft drinks, coffee, red wine, mustard, ketchup, curry, etc.) and pen oil etc.

US20130231431A disclosed stain- or dye-resistant articles comprising a polymer composition comprising at least one semi-aromatic polyamide comprising recurring units resulting from the condensation of terephthalic acid and at least one aliphatic diamine comprising more than 8 carbon atoms, at least one filler and from 0.1 to 35 wt.% of at least one white pigment, based on the total weight of the composition.

US 20140179849A disclosed the use of a polyamide molding composition to produce a stain-resistant article, the staining tendency of the article is at 2. The composition contains 30-100 wt.% of a polyamide or a polyamide mixture consisting of 50-100 wt.% of at least one amorphous and/or microcrystalline polyamide having a glass transition temperature of at least 100°C, based on 20-100 mol% of at least one cycloaliphatic diamine and 0-80 mol% of at least one aliphatic and/or aromatic diamine; and also aromatic and/or aliphatic dicarboxylic acids comprising at least 6 carbon atoms, and 0-50 wt.% of at least one semi-aromatic polyamide. In addition, 0-70 wt.% of fibrous fillers and /or particulate fillers, 0-3 wt.% of impact toughness modifier and/or polymers different from polyamide, 0-25 wt.% of a flame retardant, and 0-2 wt.% of additives may also be contained.

WO 2012049252A describes stain-resistant articles based on semi-aromatic, semi-crystalline, non-transparent polyamide molding composition having a high melting point, which derive from terephthalic acid and an aliphatic diamine comprising at least 8 carbon atoms. For example, PA 9T or PA 10T. In addition, these molding compositions necessarily contain a reinforcing agent and a white pigment.

WO2012049255A likewise describes articles, in particular casing for portable electronic devices, produced from semi-aromatic, semi-crystalline, non-transparent polyamides with a high melting point, which are to have high stain-resistance. The polyamides are based on the following monomers: terephthalic acid, isophthalic acid and aliphatic diamines comprising 6 carbon atoms. The molding composition likewise contain a reinforcing agent and a white pigment, in this case too, a whiteness of at least 70 is required. In the examples, it is shown that the molding composition based on the semi-crystalline, semi-aromatic polyamide PA 6T/6I has a lower staining tendency compared to the semi-crystalline polyamide molding compositions based on PA 66 and PA 6T/66.

The prior art documents did not disclose a polyamide composition having a good stain resistance on both curry and pen oil.

**Summary**

Present invention provides a stain-resistant polyamide composition comprising,

    a) 55-80 wt.% of semi-crystalline semi-aromatic polyamide;
    b) 5-15 wt.% of aliphatic polyamide;
    c) 15-30 wt.% of amorphous semi-aromatic polyamide;

    wherein the weight percentages of a), b) and c) are relative to the total weight of a), b) and c) and the sum of the weight percentages of a), b) and c) is 100 wt.%; and
    wherein the semi-crystalline semi-aromatic polyamide comprises repeat units derived from condensation of terephthalic acid and at least one aliphatic diamine having more than 8 and less than 12 carbon atoms.

The effect of the polyamide composition according to the invention is that molded parts made thereof have a good stain resistance on both curry and pen oil. This is shown by different examples whereas similar compositions with either the aliphatic polyamide or the amorphous semi-aromatic polyamide show a significantly less good staining resistance. In this respect, the aliphatic polyamide and the amorphous semi-aromatic polyamide in the polyamide composition according to the invention have a positive synergistic effect on the stain resistance.

**Details**

Semi-crystalline semi-aromatic polyamide

The semi-crystalline semi-aromatic polyamide in the composition according to present invention comprises repeat units derived from condensation of terephthalic acid and at least one aliphatic diamine.

The repeat units are advantageously derived from the condensation of terephthalic acid and at least one aliphatic diamine comprising more than 8 carbon atoms. Preferably, these repeat units are derived from the condensation of terephthalic acid and at least one aliphatic diamine comprising less than 12 carbon atoms; most preferably, these repeat units are derived from the condensation of terephthalic acid and one or more aliphatic diamine comprising 9, 10, or 11 carbon atoms.

Preferably, the semi-crystalline semi-aromatic polyamide according to present invention is PA 9T, PA 10T, or PA 11T, or any mixture thereof. Most preferably, the semi-crystalline semi-aromatic polyamide according to present invention is PA 10T. Suitably, the PA 10T may be prepared by various ways. It is advantageously prepared at least partially from decanediamine derived from a renewable raw material such as castor bean.

The semi-crystalline semi-aromatic polyamide according to the present invention suitably has a melting point of above 200°C, preferably, above 240 °C, more preferably above 280 °C, and most preferably, above 300 °C. Excellent result is obtained with a semi-aromatic polyamide with a melting point of 313 °C.

The semi-crystalline semi-aromatic polyamide according to present invention is present in the polymer composition in an amount of 55-80 wt.%, preferably 60-75 wt.%, more preferably 65-70 wt.% relative to the total weight of the component a), b) and c).

**Aliphatic polyamide**

The polymer composition further comprises aliphatic polyamide. The aliphatic polyamide suitably results from condensation of aliphatic diamine and aliphatic dicarboxylic acid or from polymerization of a lactam.

For example, the aliphatic polyamide is one or more selected from the group consisting of polyamide 6, polyamide 6,6; polyamide 4,6; polyamide 6,10, polyamide 4,10; polyamide 6,12, polyamide 11, polyamide 12, polyamide 9,10; polyamide 9,12, polyamide 9,13, polyamide 9,15, polyamide 6,16, polyamide 9,16, polyamide 10,10, polyamide 10,12, polyamide 10,13, polyamide 10,1, polyamide 9,15, polyamide 10, 12, polyamide 10,13, polyamide 10,14, polyamide 12,10, polyamide 12,12, polyamide 12,13, polyamide 12,14, polyamide 6,14, polyamide 6,13, polyamide 6,15, polyamide 6,16; preferably the aliphatic polyamide is one or more of polyamide 4,6, polyamide 6,10, polyamide 4,10, polyamide 6,12, and any copolymers thereof; more preferably, the aliphatic polyamide is polyamide 4,10.

The aliphatic polyamide may be present in the composition in an amount of 5-15 wt.%, preferably 8-12 wt.%, more preferably 9-10 wt.% relative to the total amount of the component a), b) and c).

**Amorphous semi-aromatic polyamide**

Further to the above mentioned semi-crystalline semi-aromatic polyamide and the aliphatic polyamide, the composition disclosed in present invention also comprises an amorphous semi-aromatic polyamide which is an amorphous semi-aromatic polyamide.

The amorphous semi-aromatic polyamide is preferably based on straight-chain and/or branched aliphatic diamines and aromatic dicarboxylic acids. With regards to the amorphous semi-aromatic polyamides, the systems polyamide DT/DI in which D is 2-methyl-1,5-pentamethylenediamine, polyamide 6I/6T or polyamide 10I/10T are preferred and polyamide 6I/6T is more preferred. The polyamide 6I/6T is a copolymer of polyamide resulting from terephthalic acid and 1, 6-hexanediamine and polyamide resulting from isophthalic acid and 1, 6-hexanediamine. Amorphous polyamide 10I/10T is a copolymer of polyamide resulting from isophthalic acid, terephthalic acid and 1,10-decanediamine, preferably with excess isophthalic acid over terephthalic acid.

In a preferred embodiment, in the polyamide 6I/6T or polyamide 10I/10T system, it has a proportion of less than 50 mol% of 6T or 10T units respectively; wherein the molar ratio of 6T to 6I in the copolyamide of polyamide 6I/6T, or the ratio of 10T to 10I in the copolyamide10I/10T is from 20:80 to 45:55, in particular from 25:75 to 40:60 is preferred.

The amount of the amorphous semi-aromatic polyamide present in present invention is 5-15 wt.%; preferably 8-12 wt.%; more preferably 10 wt.% relative to the total weight of the component a), b) and c).

## Pigment

The composition according to present invention may further comprise a pigment. The pigment could be with different color according to the different requirement. The pigment could be white pigment. The white pigment according to the present invention is preferably selected from titanium dioxide, barium sulfate, zinc sulfide, and mixtures thereof. More preferably, the white pigment is titanium dioxide or zinc sulfide.

The pigment is present in an amount of 1-10 wt.%; preferably 5- 10 wt. %; more preferably 10 wt.% of relative to the total weight of the polyamide composition.

## Fibrous reinforcing filler

The composition may further comprise at least one fibrous reinforcing filler. The fibrous reinforcing agent may be glass fiber, carbon fiber, ceramic fiber or other materials. Glass fibers are preferred. The fibrous reinforcing agent may be in the form of long glass fiber, chopped strands, milled short glass fibers, or other suitable forms known to those skilled in the art. Particularly preferred according to the invention are glass fibers having a fiber diameter of 7-18 $\mu$m, preferably 9-15 $\mu$m, most preferably about 10 $\mu$m.

The amount of the fibrous reinforcing filler present in present invention is 1-55 wt.% preferably 20-55 wt.%; more preferably 30-50 wt.% relative to the total weight of the polyamide composition.

## Other additives

The polyamide composition according present invention may further comprise some stain-resistant agent such as PTFE and/or silicones which will improve the stain resistant property. The stain-resistant agent, if present, may be in an amount of 0-10 wt.%, preferably, 2-8 wt.%, more preferably 3-6 wt.% relative to the total amount of the polyamide composition.

The polyamide composition may further comprise additional additives such as ultraviolet light stabilizers, heat stabilizers, antioxidants, processing aids, lubricants, flame retardant, mold release agent etc.

Present invention further provides an article, in particular, a frame or a housing, or a part of a frame or housing, for a portable electronic device for portable electronic devices, having improved stain-resistance. In addition, these articles have good mechanical properties, in particular, high rigidity, high strength, good impact toughness and high dimensional stability, and also good processing properties such as low molding shrinkage and low warping.

With the context of the invention, stain resistance means that the articles or casing in contact with dye stuffs used in daily life, such as in soft drinks, ketchup, red wine, mustard, especially, in curry and pen oil. Preferably, the obtained article has a $\Delta$E values of 6 or less; more preferably has a $\Delta$E value of 2 or less, most preferably, has a $\Delta$E value of 1 or less, under the determination method of ASTM E 308.

The expressions of 'above', 'below', 'within', 'higher than', 'less than', 'at least', 'no more than', 'not less than', 'in a range of', 'ranges from' 'more than' before a number in present invention include the number itself.

## Technical effect

Present invention thus provides a polyamide composition having surprisingly stain resistant behavior on both curry and pen oil and also having an excellent mechanical, physical and chemical properties such as low warpage and good flowability.

The patent invention will be described hereinafter with use of specific examples but will not be limited thereto.

## Examples

Material

| | |
|---|---|
| PA10T: | M8000, from Evonik |
| PA410: | EcoPaxx Q150, from DSM |
| PA6I/6T | Selar 3426R, from DuPont |
| Glass fiber: | Standard grade (chopped fibers length, diameter of 10 or 15 $\mu$m, for thermoplastic polyamide molding compositions) |
| ZnS: | HDS |

(continued)

| PTFE | 3300D |
| MRA | mold release agent |

### Test method

#### Reference

The sample without staining media (no curry, no pen oil) was used as reference. Before being stained, the L\*, a\*, b\* values of the reference were determined by using a color meter- Konica Minolta MC3700d according the determination of ASTM E 308.

#### Stained by curry

The samples were painted by yellow Indian curry on the surface and stored for 1 hour at 50 °C with a relative humidity of 95%.
After storage, the colored plates were brought out and left under room temperature for 1 hour and then cleaned with aqueous soap solution until the sample surfaces were free from adhering residue of the curry.

#### Stained by pen oil

The samples were drawn 5 lines on the surface by using an oil pen (MO-120-MC-BK, ZEBIFA oiliness), then stored for 1 hour at 50 °C with a relative humidity of 95%. After storage, the drawn plates were brought out and left under room temperature for 1 hour and then cleaned by a cloth dipped with alcohol for 10 times.
After cleaning, the L\*, a\*, b\* values of test colored plates were determined by using a color meter-Konica Minolta CM3700d under the determination of ASTM E 308.
The color difference $\Delta E$ between the color locations (L\*,a\*,b\*)reference and color locations (L\*, a\*, b\*)sample was calculated in accordance the formula as follows,

$$\Delta E = \sqrt{\left(L^*_{sample} - L^*_{reference}\right)^2 + \left(a^*_{sample} - a^*_{reference}\right)^2 + \left(b^*_{sample} - b^*_{reference}\right)^2} \qquad (I)$$

The staining tendency (ST) in the described staining test was quantified by the value of color difference $\Delta E$;
It can be classified as follows:

ST1: no staining or only very slight staining (0<$\Delta E \le 2$)-good
ST2: considerable staining (2<$\Delta E \le 6$)-medium
ST3: heavy staining (corresponds to an $\Delta E$ >6)-bad

Articles (molded parts, components) according to the invention have a staining tendency of class ST1 orST2, that is to say the $\Delta E$ value is 6 at most.

### Examples

The compounding of the components of Examples 1-3 and comparative examples 1-5 as specified in table 1 were carried out in a twin-screw extruder using standard compounding conditions.
The sample plates were produced by injection molding of compounds using injection machine with a mold temperature of 140°C and melt temperature of 335 °C.
The values of L\*, a\*, b\* of the reference, curry stained plates and the pen oil stained plates were measured according to the above-mentioned test method respectively and the color difference ($\Delta E$) of the curry stained plates and the pen oil stained plates were obtained according to the calculation according of formula (I). The test results were listed in the table 1.

**Conclusion**

As can be seen from table 1, comparing to the comparative examples, the polyamide compositions obtained by examples 1,2,3 have a very lower value of the color difference ($\Delta$E) on both of curry resistance and pen oil resistance.

**Table 1**

| | Ex 1 | Ex 2 | Ex 3 | Comparative Ex1 | Comparative Ex2 | Comparative Ex3 | Comparative Ex4 | Comparative Ex5 |
|---|---|---|---|---|---|---|---|---|
| PA10T | 28 | 27.86 | 24.5 | 18 | 81 | 81 | 63 | 28 |
| PA410 | 4 | 3.98 | 3.5 | 18 | 9 | --- | 27 | 12 |
| PA6I/6T | 8 | 7.96 | 7 | 4 | --- | 9 | 0 | --- |
| PTFE | --- | --- | 5 | --- | --- | --- | --- | --- |
| Glass fiber | 50 | 50 | 50 | 50 | --- | --- | --- | 50 |
| ZnS | 10 | 10 | 10 | 10 | 10 | 10 | 10 | 10 |
| MRA | --- | 0.2 | --- | --- | --- | --- | --- | --- |
| Total | 100 | 100 | 100 | 100 | 100 | 100 | 100 | 100 |
| Curry resistance | | | | | | | | |
| L* | 94.91 | 94.98 | 94.08 | 95.1 | 97.01 | 96.78 | 96.95 | 94.96 |
| a* | -1.8 | -1.73 | -2 | -9.51 | -2.4 | -2.32 | -2.1 | -2.26 |
| b* | 3.68 | 3.3 | 6.55 | 21.72 | 4.65 | 4.75 | 4.28 | 4.35 |
| ΔE | 0.4 | 0.39 | 0.79 | 19.69 | 1.88 | 1.96 | 1.45 | 1.22 |
| Remark | Good | Good | Good | Bad | Good | Good | Good | Good |
| Pen oil resistance | | | | | | | | |
| L* | 90.35 | 91.64 | 91.02 | 84.61 | 88.37 | 80.64 | 68.58 | 77.74 |
| a* | -1.95 | -1.73 | -1.7 | -7.46 | -1.41 | -1.27 | -4.64 | -2.71 |
| b* | 0.98 | 1.42 | 4.43 | 22.34 | -1.11 | -4.34 | 1.84 | -1.18 |
| ΔE | 5.4 | 4.1 | 3.77 | 22.31 | 9.18 | 17.21 | 28.39 | 17.69 |
| Remark | Medium | Medium | Medium | Bad | Bad | Bad | Bad | Bad |

**Claims**

1. A stain-resistant polyamide composition comprising,

   a) 55-80 wt.% of semi-crystalline semi-aromatic polyamide;
   b) 5-15 wt.% of aliphatic polyamide;
   c) 15-30 wt.% of amorphous semi-aromatic polyamide;
   wherein the weight percentages of a), b) and c) are relative to the total weight of a), b) and c) and the sum of the weight percentages of a), b) and c) is 100 wt.%; and
   wherein the semi-crystalline semi-aromatic polyamide comprises repeat units derived from condensation of terephthalic acid and at least one aliphatic diamine having more than 8 and less than 12 carbon atoms.

2. The stain-resistant polyamide composition according to claim 1, wherein the composition further comprises d) 1-55 wt.% of fibrous reinforcing filler relative to the total weight of the composition.

3. The stain-resistant polyamide composition according to claim 1 or 2, wherein the composition further comprises e) 1-10 wt.% of white pigment relative to the total weight of the composition.

4. The stain-resistant polyamide composition according to claim 1, wherein semi-crystalline semi-aromatic polyamide is PA9T, PA10T, or PA11T, or any mixture thereof.

5. The stain-resistant polyamide composition according to claim 1, wherein the aliphatic polyamide comprises repeat units derived from condensation of aliphatic diamine and aliphatic dicarboxylic acid or from polymerization of a lactam.

6. The stain-resistant polyamide composition according to claim 5, wherein the aliphatic polyamide is one or more selected from the groups consisting of polyamide 6, polyamide 6,6; polyamide 4,6; polyamide 6,10, polyamide 4,10; polyamide 6,12, polyamide 11, polyamide 12, polyamide 9,10; polyamide 9,12, polyamide 9,13, polyamide 9,15, polyamide 6,16, polyamide 9,16, polyamide 10,10, polyamide 10,12, polyamide 10,13, polyamide 10,1, polyamide 9,15, polyamide 10, 12, polyamide 10,13, polyamide 10,14, polyamide 12,10, polyamide 12,12, polyamide 12,13, polyamide 12,14, polyamide 6,14, polyamide 6,13, polyamide 6,15, polyamide 6,16; preferably the aliphatic polyamide is polyamide 4,6, polyamide 6,10, polyamide 4,10, polyamide 6,12; and any copolymers thereof, more preferably, the aliphatic polyamide is polyamide 4,10.

7. The stain-resistant polyamide composition according to claim 6, wherein the amorphous semi-aromatic polyamide is polyamide 6I/6T or polyamide DT/DI, or a mixture thereof.

8. The stain-resistant polyamide composition according to claim 2 wherein the fibrous reinforcing filler includes glass fiber and/or carbon fiber.

9. The stain-resistant polyamide composition according to claim 8, wherein the fibrous reinforcing filler is glass fiber.

10. The stain-resistant polyamide composition according to claim 3, wherein the white pigment is selected from titanium dioxide, barium sulfate, zinc sulfide, and mixtures thereof; preferably, the pigment is titanium dioxide or zinc sulfide.

11. An article made of the stain-resistant polyamide composition according any of claims 1-10.

12. The article according to claim 11, wherein the article is a frame or a housing, or a part of a frame or housing, for a portable electronic device.

**Patentansprüche**

1. Fleckenbeständige Polyamidzusammensetzung, umfassend

   a) 55-80 Gew.-% teilkristallines teilaromatisches Polyamid;
   b) 5-15 Gew.-% aliphatisches Polyamid;
   c) 15-30 Gew.-% amorphes teilaromatisches Polyamid; wobei sich die Gewichtsprozentanteile von a), b) und c) auf das Gesamtgewicht von a), b) und c) beziehen und die Summe der Gewichtsprozentanteile von a), b) und c) 100 Gew.-% beträgt; und

wobei das teilkristalline teilaromatische Polyamid Wiederholungseinheiten umfasst, die sich aus der Kondensation von Terephthalsäure und mindestens einem aliphatischen Diamin mit mehr als 8 und weniger als 12 Kohlenstoffatomen ableiten.

2. Fleckenbeständige Polyamidzusammensetzung nach Anspruch 1, wobei die Zusammensetzung ferner d) 1-55 Gew.-% faserförmigen verstärkenden Füllstoff, bezogen auf das Gesamtgewicht der Zusammensetzung, umfasst.

3. Fleckenbeständige Polyamidzusammensetzung nach Anspruch 1 oder 2, wobei die Zusammensetzung ferner e) 1-10 Gew.-% Weißpigment, bezogen auf das Gesamtgewicht der Zusammensetzung, umfasst.

4. Fleckenbeständige Polyamidzusammensetzung nach Anspruch 1, wobei es sich bei dem teilkristallinen teilaromatischen Polyamid um PA9T, PA10T oder PA11T oder eine Mischung davon handelt.

5. Fleckenbeständige Polyamidzusammensetzung nach Anspruch 1, wobei das aliphatische Polyamid Wiederholungseinheiten umfasst, die sich aus der Kondensation von aliphatischem Diamin und aliphatischer Dicarbonsäuren oder aus der Polymerisation eines Lactams ableiten.

6. Fleckenbeständige Polyamidzusammensetzung nach Anspruch 5, wobei es sich bei dem aliphatischen Polyamid um eines oder mehrere aus der Gruppe bestehend aus Polyamid 6, Polyamid 6,6; Polyamid 4,6; Polyamid 6,10, Polyamid 4,10; Polyamid 6,12, Polyamid 11, Polyamid 12, Polyamid 9,10; Polyamid 9,12, Polyamid 9,13, Polyamid 9,15, Polyamid 6,16, Polyamid 9,16, Polyamid 10,10, Polyamid 10,12, Polyamid 10,13, Polyamid 10,1, Polyamid 9,15, Polyamid 10,12, Polyamid 10,13, Polyamid 10,14, Polyamid 12,10, Polyamid 12,12, Polyamid 12,13, Polyamid 12,14, Polyamid 6,14, Polyamid 6,13, Polyamid 6,15, Polyamid 6,16 handelt; vorzugsweise es sich bei dem aliphatischen Polyamid um Polyamid 4,6, Polyamid 6,10, Polyamid 4,10, Polyamid 6,12 und Copolymere davon handelt, weiter bevorzugt es sich bei dem aliphatischen Polyamid um Polyamid 4,10 handelt.

7. Fleckenbeständige Polyamidzusammensetzung nach Anspruch 6, wobei es sich bei dem amorphen teilaromatischen Polyamid um Polyamid 6I/6T oder Polyamid DT/DI oder eine Mischung davon handelt.

8. Fleckenbeständige Polyamidzusammensetzung nach Anspruch 2, wobei der faserförmige verstärkende Füllstoff Glasfaser und/oder Kohlenstofffaser enthält.

9. Fleckenbeständige Polyamidzusammensetzung nach Anspruch 8, wobei es sich bei dem faserförmigen verstärkenden Füllstoff um Glasfaser handelt.

10. Fleckenbeständige Polyamidzusammensetzung nach Anspruch 3, wobei das Weißpigment aus Titandioxid, Bariumsulfat, Zinksulfid und Mischungen davon ausgewählt ist; vorzugsweise es sich bei dem Pigment um Titandioxid oder Zinksulfid handelt.

11. Gegenstand, hergestellt aus der fleckenbeständigen Polyamidzusammensetzung nach einem der Ansprüche 1-10.

12. Gegenstand nach Anspruch 11, wobei es sich bei dem Gegenstand um einen Rahmen oder ein Gehäuse oder einen Teil eines Rahmens oder Gehäuses für eine tragbare elektronische Vorrichtung handelt.

**Revendications**

1. Composition de polyamide résistant aux tâches comprenant,

a) 55 à 80 % en poids de polyamide semi-aromatique semi-cristallin ;
b) 5 à 15 % en poids de polyamide aliphatique ;
c) 15 à 30 % en poids de polyamide semi-aromatique amorphe ;
les pourcentages en poids de a), b) et c) étant par rapport au poids total de a), b) et c) et la somme des pourcentages en poids de a), b) et c) étant de 100 % en poids ; et
le polyamide semi-aromatique semi-cristallin comprenant des motifs répétitifs issus de la condensation d'acide téréphtalique et d'au moins une diamine aliphatique possédant plus de 8 et moins de 12 atomes de carbone.

**2.** Composition de polyamide résistant aux tâches selon la revendication 1, la composition comprenant en outre d) 1 à 55 % en poids de charge de renforcement fibreuse par rapport au poids total de la composition.

**3.** Composition de polyamide résistant aux tâches selon la revendication 1 ou 2, la composition comprenant en outre e) 1 à 10 % en poids de pigment blanc par rapport au poids total de la composition.

**4.** Composition de polyamide résistant aux tâches selon la revendication 1, le polyamide semi-aromatique semi-cristallin étant PA9T, PA10T ou PA11T, ou un quelconque mélange correspondant.

**5.** Composition de polyamide résistant aux tâches selon la revendication 1, le polyamide aliphatique comprenant des motifs répétitifs issus de la condensation d'une diamine aliphatique et d'un acide dicarboxylique aliphatique ou de la polymérisation d'un lactame.

**6.** Composition de polyamide résistant aux tâches selon la revendication 5, le polyamide aliphatique étant l'un ou plusieurs choisis dans le groupe constitué par le polyamide 6, le polyamide 6,6 ; le polyamide 4,6 ; le polyamide 6,10, le polyamide 4,10 ; le polyamide 6,12, le polyamide 11, le polyamide 12, le polyamide 9,10 ; le polyamide 9,12, le polyamide 9,13, le polyamide 9,15, le polyamide 6,16, le polyamide 9,16, le polyamide 10,10, le polyamide 10,12, le polyamide 10,13, le polyamide 10,1, le polyamide 9,15, le polyamide 10,12, le polyamide 10,13, le polyamide 10,14, le polyamide 12,10, le polyamide 12,12, le polyamide 12,13, le polyamide 12,14, le polyamide 6,14, le polyamide 6,13, le polyamide 6,15, le polyamide 6,16 ; préférablement le polyamide aliphatique étant le polyamide 4,6, le polyamide 6,10, le polyamide 4,10, le polyamide 6,12 ; et de quelconques copolymères correspondants, plus préférablement, le polyamide aliphatique étant le polyamide 4,10.

**7.** Composition de polyamide résistant aux tâches selon la revendication 6, le polyamide semi-aromatique amorphe étant le polyamide 6I/6T ou le polyamide DT/DI, ou un mélange correspondant.

**8.** Composition de polyamide résistant aux tâches selon la revendication 2, la charge de renforcement fibreuse comprenant une fibre de verre et/ou une fibre de carbone.

**9.** Composition de polyamide résistant aux tâches selon la revendication 8, la charge de renforcement fibreuse étant une fibre de verre.

**10.** Composition de polyamide résistant aux tâches selon la revendication 3, le pigment blanc étant choisi parmi le dioxyde de titane, le sulfate de baryum, le sulfure de zinc et des mélanges correspondants ; préférablement le pigment étant le dioxyde de titane ou le sulfure de zinc.

**11.** Article composé de la composition de polyamide résistant aux tâches selon l'une quelconque des revendications 1 à 10.

**12.** Article selon la revendication 11, l'article étant un cadre ou un boîtier, ou une partie d'un cadre ou d'un boîtier, pour un dispositif électronique portable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130231431 A
- US 20140179849 A
- WO 2012049252 A
- WO 2012049255 A